# EUROPEAN PATENT SPECIFICATION

(11) **EP 3 628 562 B1**
(45) Date of publication and mention of the grant of the patent: **20.04.2022**
(21) Application number: 19196201.8
(22) Date of filing: 09.09.2019
(51) Int. Cl.: B61D 17/02, B61F 19/04

(54) **RAILWAY VEHICLE**
SCHIENENFAHRZEUG
VÉHICULE FERROVIAIRE

(30) Priority: 27.09.2018 GB 201815777
(43) Date of publication of application: 01.04.2020
(73) Proprietor: Hitachi, Ltd., Tokyo 100-8280 (JP)
(72) Inventor: BADALOTTI, Timoteo, Chiyoda-ku, Tokyo 100-8280 (JP); MATSUI, Akitoshi, Chiyoda-ku, Tokyo 100-8280 (JP); MORITA, Kiyoshi, Chiyoda-ku, Tokyo 100-8280 (JP); TAKAHARA, Kyouji, Chiyoda-ku, Tokyo 100-8280 (JP); KOREISHI, Kazuto, Chiyoda-ku, Tokyo 100-8280 (JP)
(74) Representative: Mewburn Ellis LLP

(56) References cited:
- EP-A1- 3 266 669
- EP-A2- 2 017 153
- WO-A1-2011/120834
- JP-A- 2008 239 117

## Description

### Technical Field

The present invention generally relates to a railway vehicle, especially a cover for the bottom of the nose of the railway vehicle.

### Background Art

High-speed rail networks answer the need to quickly convey passengers and freight by means of a transportation system that minimizes the impact on the environment both in terms of energy consumption and noise generated. At high speed, aerodynamic resistance to advancement, also known as drag, and aerodynamic noise are proportional to, respectively, the second and the sixth power of speed. Accordingly, at high speed, the train aerodynamics account both for the largest amount of energy required to drive the train and for the largest contribution to noise. Therefore, an aerodynamically efficient and noise-wise unobtrusive train shape is sought after.

The key technique to suppress the generation of drag (and, consequently, energy consumption), and noise is to streamline the train by preventing the airflow from running over the train areas that feature projecting parts (e.g. bogie parts, nose-underside parts) and/or cavities (e.g. the cavities accommodating the bogies). The reason is that projecting parts generate vortices that increase noise, whereas large cavities cause the air to flow against the windward faces of the cavities, thus creating areas of high pressure pushing the cavities along with the flow, which, in turns, implies greater drag.

The train leading-car bottom is the most critical train area in that the incoming flow is fastest because the boundary layer around the train is not fully developed, and it features many projecting parts (for example, antenna, air horn, air-horn piping, transponder, and deflector) and large cavities (for example, hollow inside the skirt, and bogie cavity).

A frequently adopted solution for streamlining the train leading-car bottom is to cover the whole bottom area from the train nose tip to the cavity accommodating the bogie. Nonetheless, the train design may require a deflector to be placed somewhere between the nose tip and the bogie cavity. The deflector is a thick plate that is attached to a piston fitted with a damper and hinged under the train nose. In case of collision with bulky foreign objects located on the rails, the deflector absorbs the shock through the damper. The deflector protrudes below the front of the train nose bottom and vibrates with small oscillations with respect to the train nose because the car-body vibrations are transmitted through the damper. When the deflector is required, the conventional solution of covering the whole bottom is not applicable because the cover would hinder the vibration of the deflector.

Usually trains travel back and forth in opposite directions, which means that the leading car becomes the trailing car and vice versa. The train shape should perform aerodynamically well, that is to say that high-speed flow against the bottom equipment and the deflector should be avoided, for both traveling directions. However, given that the flow speed under the train at the trailing car is significantly slower than at the leading car, the leading car is prominent in terms of drag and noise. From now on, unless otherwise specified, all the descriptions with respect to a train car will refer to the leading car.

WO 2011/120834 **proposes a rail vehicle according to the pre-characterising portion of claim 1.**

### Summary of Invention

### Technical Problem

A cover for the bottom of the nose of a train leading car is necessary to reduce drag by preventing high-speed flow from running against the projecting parts therein located, which are the parts installed below the nose bottom between the nose tip and the deflector, that is the parts making up the bottom equipment.

Furthermore, such a cover is necessary to reduce noise by preventing high-speed inflow from running in the cavities therein located, that is to say the cavity accommodating the bottom equipment between the nose tip and the deflector and the cavity accommodating the bogie on the other side of the deflector.

Conventionally, covers are adopted that cover the whole area of the leading-car bottom from its tip to the bogie cavity. However, some train configurations require the deflector to be clear of the cover to vibrate on the hinges it is mounted on through a piston, and conventional covers are not feasible because they would obstruct the deflector.

High-speed airflow must be deviated from the deflector irrespective of the traveling direction of the train. Otherwise, a significant amount of drag would be generated by the deflector.

### Solution to Problem

**A railway vehicle according to claim 1 is provided.**

### Advantageous Effects of Invention

Even though a railway vehicle requires a deflector, the present invention allows such a railway vehicle to reduce drag and noise.

### Brief Description of Drawings

FIG. 1 shows a view of the bottom of the leading car without the nose-bottom cover.
FIG. 2 shows a view of the bottom of the leading car with the nose-bottom cover which is composed of the front component and the rear component.
FIG. 3 shows a view of the cross section A-A' in FIG. 2.
FIG. 4 shows a view of the cross section A-A' in accordance with a comparative example.
FIG. 5 shows a view of the cross section A-A' in FIG. 2.
FIG. 6 shows a view of the cross section B-B' in FIG. 3.

### Description of Embodiments

Here is summary of the following embodiment in accordance with example implementations.

A railway vehicle comprises a leading car. The leading car comprises a nose with a nose tip which is a tip of the leading car, a bogie, a bottom equipment of the nose which is the equipment that is fitted onto the bottom in a nose area, a skirt which is a strip enclosing the vertical sides of the bottom equipment, and a deflector which is a plate configured to deflect foreign objects on rail tracks and which is installed between the skirt and the bogie on a piston that is fitted with a damper and hinged to the nose underside. The railway vehicle (specifically, the leading car) comprises a nose-bottom cover which is different from conventional nose-bottom covers. The nose-bottom cover is composed of components including two components. The two components are a component spanning the whole bottom area from the leading-car tip to approximately the deflector front face (the face towards the leading-car tip) and a separate component located between the deflector back face (the face towards the bogie) and the bogie cavity. The former will be referred to as front component in the sequel, whereas the latter will be referred to as rear component.

The front component prevents airflow (typically, high-speed flow) against the projecting parts located on the nose bottom between the deflector and the nose tip (typically, air horn, antenna, transponder, air-horn piping).

The front component has a ramp shape that deviates the airflow towards the rail away from the deflector.

The rear component has a ramp shape that deviates airflow (typically, the high-speed flow) away towards the rail away from the nose bogie and its cavity.

In order to reduce drag and noise when the train travels in the opposite direction and the leading car becomes the trailing car, the rear component features a surface that faces the bogie. Such a surface spans the whole train width and runs from the rear component bottom to the train bottom between the deflector and the nose bogie in such a way as to prevent high-speed flow from under the bogie against the deflector.

According to the embodiment, it is possible to reduce drag through the front component by preventing the high-speed flow from entering the cavity accommodating the bottom equipment.

According to the embodiment, it is possible to reduce noise by preventing high-speed flow against the projecting parts of the bottom equipment and deflector. The high-speed flow is deviated towards the rails by the front component.

According to the embodiment, it is possible to reduce drag through the rear component by preventing the high-speed flow from entering the cavity accommodating the nose bogie.

According to the embodiment, as opposed to conventional covers, the deflector is able to vibrate unobstructed with respect to the train nose.

According to the embodiment, it is possible to prevent inflow against the bottom equipment also when the train is running in the opposite direction, that is to say when the leading car becomes the trailing car and vice versa, by employing a plate mounted between the rear component and the bogie.

Here is the detailed description of the embodiment.

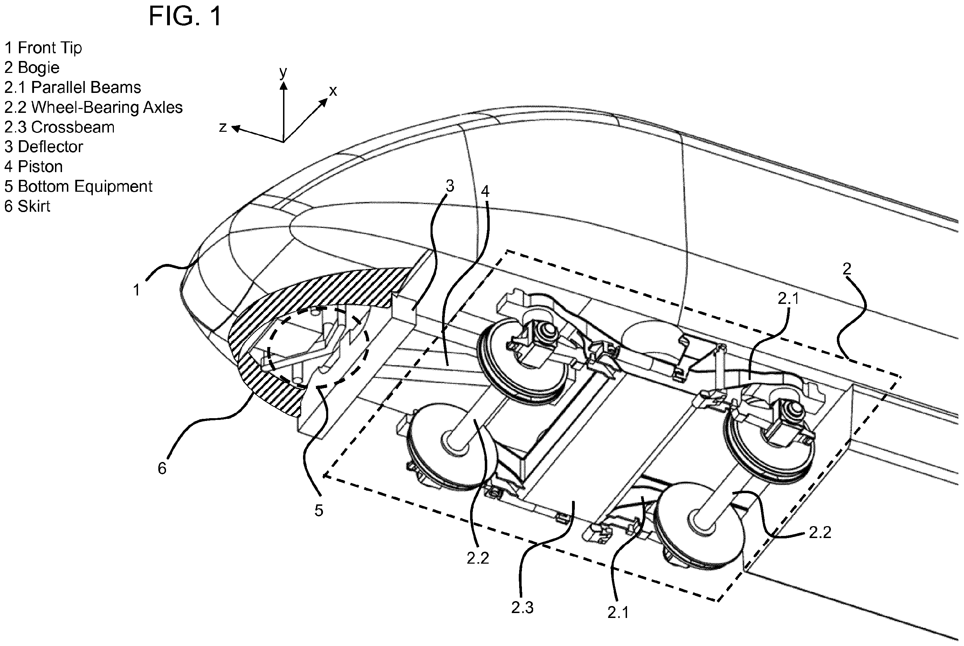

FIG. 1 shows a view of the bottom of the leading car without the nose-bottom cover.

The nose bogie (2) of the leading car comprises its constituent parts, that is to say the parallel beams (2.1) joining the wheel-bearing axles (2.2) and joined by the crossbeam (2.3). The bogie (2) supports the leading car and is placed on its bottom, that is to say on the leading-car side facing opposite to the y-direction. The bogie (2) lies in a cavity in the train bottom that is bounded along the z-axis in the positive direction by the deflector or some other bottom equipment and in the negative direction by other bottom equipment.

As depicted in FIG. 1, the leading car is fitted with a deflector (3), which is a resilient structure that is mounted on a piston (4), which is fitted with a damper and hinged to the train bottom. Accordingly, the deflector (3) can vibrate both in the y- and z-directions with small oscillations.

As depicted in Fig. 1, the nose of the leading car ahead of the bogie (2) in the z-direction is delimited by the nose front tip (1) and is fitted with bottom equipment (5) featuring projecting parts. A skirt (6) encloses the sides of the bottom equipment in the x- and z-directions but not in the negative y-direction.

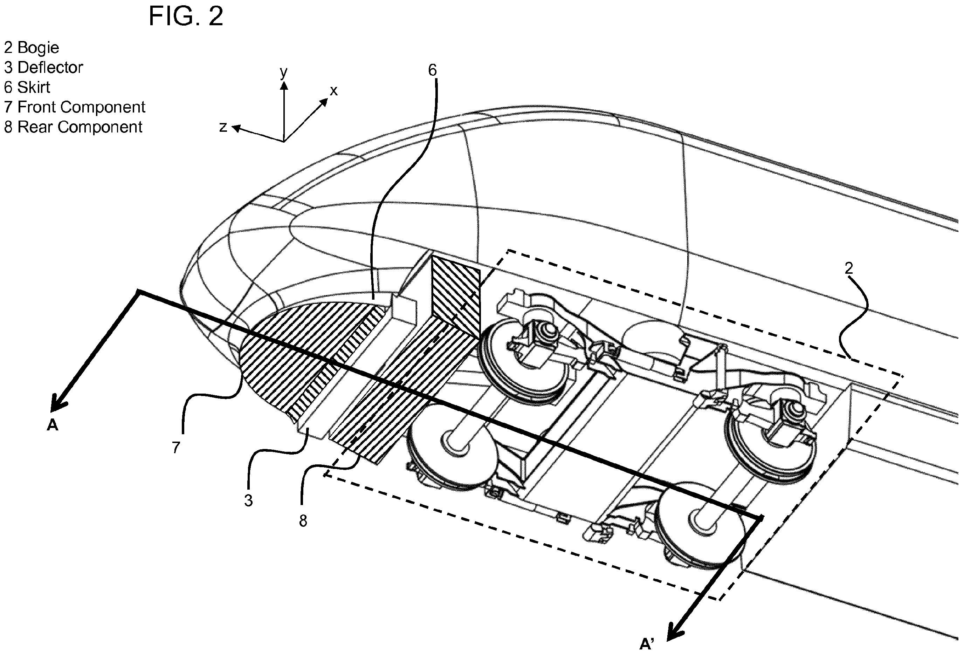

FIG. 2 shows a view of the bottom of the leading car with the nose-bottom cover.

The nose-bottom cover is composed of at least two components including a front component (7) and a rear component (8). The front component (7) is located farther ahead of the deflector (3) in the z-direction and extends all over the bottom of the skirt (6). The rear component (8) is placed between the deflector (3) and the bogie (2). Both the components (7) and (8) leave the clearance that is required for the deflector (3) to vibrate. The front component (7) covers the bottom equipment inside the skirt (6), thus avoiding high-speed flow against it and reducing noise.

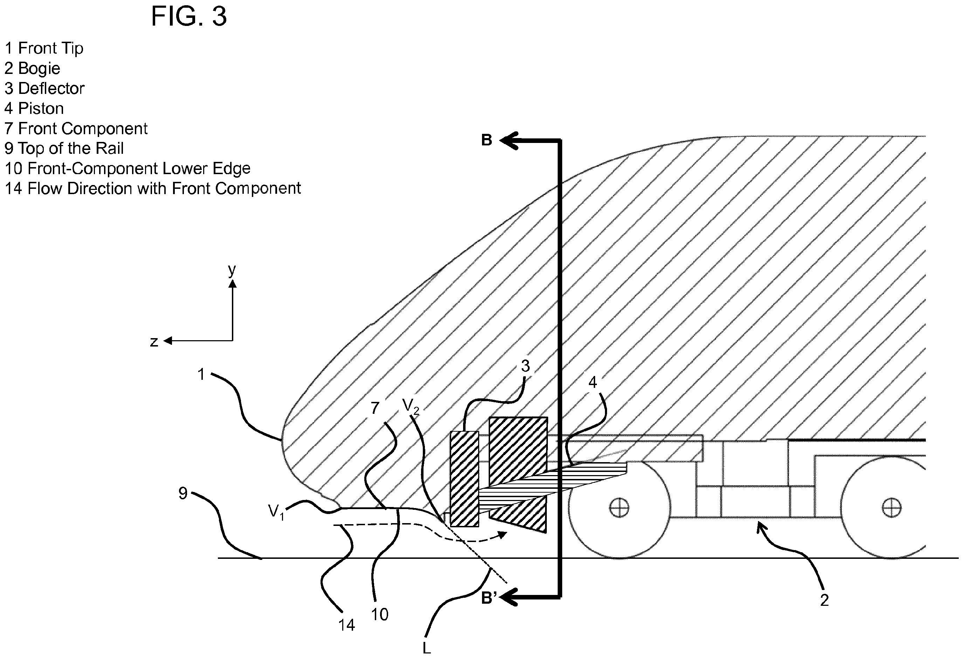

FIG. 3 shows a view of the cross section A-A' of FIG. 2.

The cross section A-A' is any cross section that cuts the train and is parallel to the yz-plane. The front component (7), in the cross section A-A', is delineated by the front-component lower edge (10), that is to say the edge of the front component (7) that is closest to the top (9) of the rail. The front-component lower edge (10) has to vertices. Vertex V₁ is closer to the front tip (1) of the leading car, whereas vertex V₂ is closer to the deflector (3). The lower edge (10) bends towards the rail near V₂, and the bend thus formed features a line L (tangent in V₂) that avoids (in other words, does not intercept) the deflector (3) in the cross section A-A'. In accordance with the flow direction (14) with the front component (7) depicted in Fig. 3, the bend of the lower edge (10) drives the high-speed flow in the tangent direction, which implies that the high-speed flow is driven downwards towards the top (9) of the rail and not against the deflector (3). Accordingly, the deflector (3) will not generate much noise.

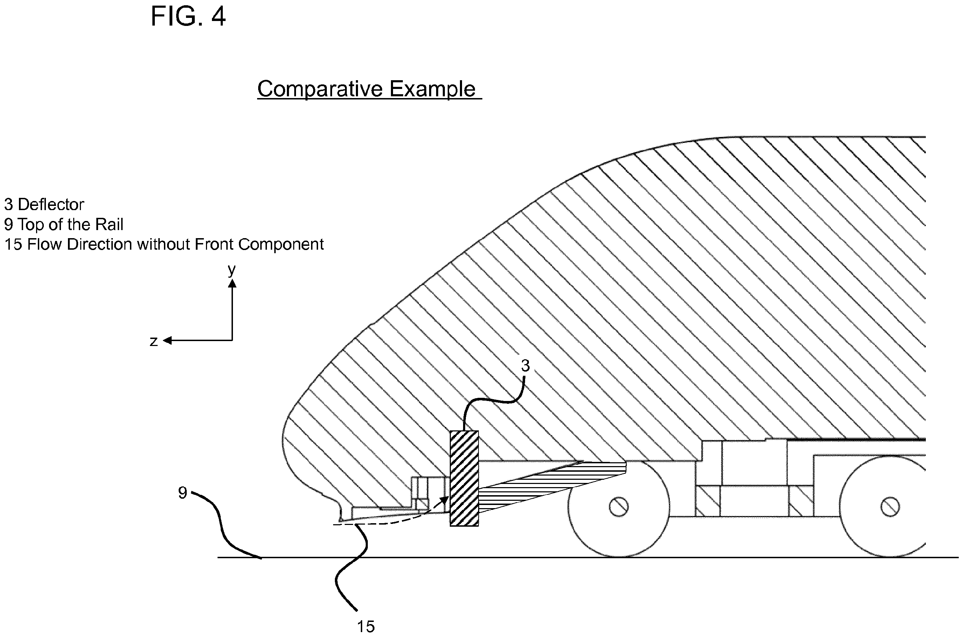

In accordance with the flow direction (15) without the front component (7) depicted in Fig. 4, the high-speed flow enters the cavity inside the skirt and hits the deflector (3) generating a highpressure area on the deflector front side, which, in turn, increases drag.

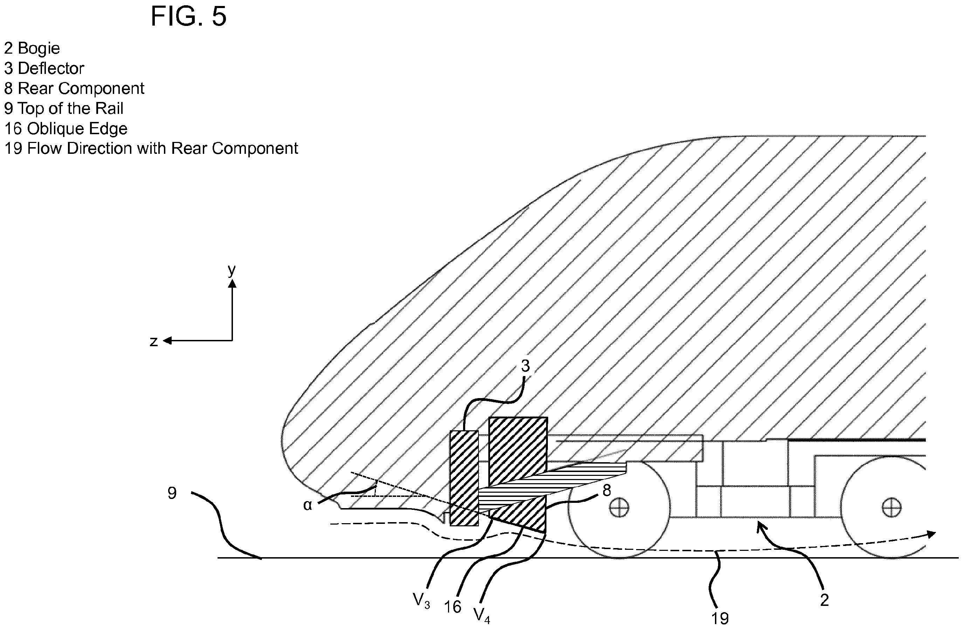

FIG. 5 shows a relevant shape feature of the rear component (8) in the cross section A-A'.

The rear component (8), in the cross section A-A', is delineated by an oblique edge (16), that is to say the edge of the rear component (8) that is closest to the top of the rail (9). The oblique edge (the lower edge) (16) has two vertices V₃ and V₄. Vertex V₃ is closer to the deflector (3), whereas vertex V₄ is closer to the bogie (2). V₃ is higher above the top of the rail than V₄ in the y-direction. In accordance with the flow direction (19) with the rear component (8) depicted in Fig. 5, the height of the two vertices V₃ and V₄ above the top of the rail (9) is such that the high-speed flow that is deviated away from the deflector (3) by the front component (7) flows downstream and is deviated away from the bogie cavity by the rear component (8), thus reducing noise because high-speed flow does not run against the projecting parts of the bogie (2) and drag because it does not enter the bogie cavity. In order to achieve this effect, the height of V₃ and V₄ and the angle a that a line passing through V₃ and V₄ forms with the z-axis are supposed to be organized. For example, V₃ and V₄ are approximately as high as the bottom of the deflector (3) in the y-direction, and the angle α (20) is around 30 degrees.

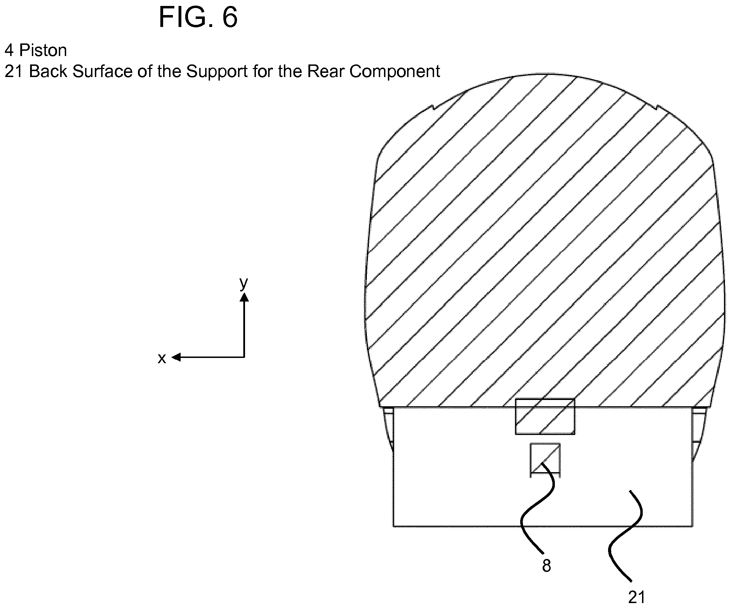

FIG. 6 shows a view of the cross section B-B' of FIG. 3.

According to FIG. 3, the cross section B-B' is parallel to the xy-plane, its view points in the z-direction, and cuts the train between the bogie (2) and the rear component (8). The rear component (8) is mounted below a support that fastens it to the train bottom. The back surface (21) of the support for the rear component (8), that is to say its surface facing the bogie (2), spans the whole train width and covers the area from the train bottom to the locus of the vertices V₄ for any cross sections A-A'. This surface prevents high-speed flow from running against the deflector (3) when the train is running in the opposite direction and the leading car becomes the trailing car.

The support of the rear component (8) may enclose equipment such as the junction box and/or the cleaning-liquid tank.

### Reference Signs List

- 1: Front Tip
- 2: Bogie
- 2.1: Parallel Beams
- 2.2: Wheel-Bearing Axles
- 2.3: Crossbeam
- 3: Deflector
- 4: Piston
- 5: Bottom Equipment
- 6: Skirt
- 7: Front Component
- 8: Rear Component
- 9: Top of the Rail
- 10: Front-Component Lower Edge
- 14: Flow Direction with Front Component
- 15: Flow Direction without Front Component
- 16: Oblique Edge
- 19: Flow Direction with Front Component
- 21: Back Surface of the Support for the Rear Component

## Claims

1. A railway vehicle which comprises a leading car, the leading car comprising a nose with a nose tip which is a tip (1) of the leading car, a bogie (2), a bottom equipment (5) of the nose which is the equipment that is fitted onto the bottom in a nose area, and a skirt (6) which is a strip enclosing the vertical sides of the bottom equipment, the railway vehicle comprising:
a front component (7) which is a cover that is placed below the skirt (6) and extends over all the skirt width; and
a rear component (8) which is a separate cover that spans the whole width of the nose;
**characterised in that**
the railway vehicle further comprises a deflector (3) which is configured to deflect foreign objects on rail tracks (9) on which the railway vehicle runs in use, the deflector being installed between the skirt (6) and the bogie (2) on a piston (4);
the front component (7) further extends over all the skirt length up to the deflector (3) except for a clearance between the cover and the deflector in order to allow the deflector to vibrate;
the rear component (8) is placed between the bogie (2) that is closest to the nose and the deflector (3) at a distance from the deflector that is large enough to allow it to vibrate; and
the front component (7), in a cross section that is parallel to the mid-plane of the leading car, is bent towards the rail tracks (9) on to the deflector side and the tangent to its vertex on the bent edge in the same cross section does not intercept the deflector (3).

2. The railway vehicle according to claim 1, wherein
the rear component (8), in a cross section that is parallel to the mid-plane of the leading car, comprises an oblique edge (16) on its side facing the rail tracks (9), and the vertex of the oblique edge closer to the deflector (3) is higher above the rail than the vertex of the oblique edge closer to the bogie (2).

3. The railway vehicle according to claim 1, wherein
the front component (7) comprises a ramp shape that deviates airflow towards the rail tracks (9) away from the deflector (3).

4. The railway vehicle according to claim 1 or 3, wherein
the rear component (8) comprises a ramp shape that deviates airflow towards the rail tracks (9) away from the nose bogie (2) and its cavity.

5. The railway vehicle according to any one of claims 1 to 4, wherein
the rear component (8) is mounted below a support that fastens it to the train bottom, and
the back surface (21) of the support facing the bogie spans the whole train width and reaches the train bottom.

## Patentansprüche

1. Schienenfahrzeug, das einen Führungswagen umfasst, wobei der Führungswagen eine Nase mit einem Nasenvorderende, das das Vorderende (1) des Führungswagens ist, ein Fahrgestell (2), eine Bodeneinrichtung (5) der Nase, die die Einrichtung ist, die an den Boden in einem Nasenbereich angepasst ist, und eine Schürze (6), die ein Streifen ist, der die vertikalen Seiten der Bodeneinrichtung umschließt, umfasst, wobei das Schienenfahrzeug Folgendes umfasst:
eine Vorderseitenkomponente (7), die eine Abdeckung ist, die unterhalb der Schürze (6) angeordnet ist und sich über die gesamte Schürzenbreite erstreckt; und
eine Rückseitenkomponente (8), die eine separate Abdeckung ist, die sich über die gesamte Breite der Nase erstreckt;
**dadurch gekennzeichnet, dass**
das Schienenfahrzeug ferner ein Räumerelement (3) umfasst, das ausgelegt ist, um fremde Gegenstände auf Gleisen (9), auf denen das Schienenfahrzeug bei Verwendung fährt, beiseite zu räumen, wobei das Räumerelement zwischen der Schürze (6) und dem Fahrgestell (2) auf einem Kolben (4) angebracht ist;
die Vorderseitenkomponente (7) sich weiter über die gesamte Schürzenlänge bis zum Räumerelement (3) erstreckt, mit Ausnahme eines Freiraums zwischen der Abdeckung und dem Räumerement, um ein Schwingen des Räumerelements zu ermöglichen;
die Rückseitenkomponente (8) zwischen dem Fahrgestell (2), das der Nase am nächsten ist, und dem Räumerelement (3) in einem Abstand vom Räumerelement, der groß genug ist, um ein Schwingen desselben zu ermöglichen, angeordnet ist; und
die Vorderseitenkomponente (7) in einem Querschnitt parallel zur Mittelebene des Führungswagens in Richtung der Gleise (9) und zur Räumerelementseite hin gebogen ist und die Tangente durch ihren Eckpunkt auf der gebogenen Kante im selben Querschnitt das Räumerelement (3) nicht schneidet.

2. Schienenfahrzeug nach Anspruch 1, wobei
die Rückseitenkomponente (8) in einem Querschnitt parallel zur Mittelebene des Führungswagens eine schräge Kante (16) auf ihrer den Gleisen (9) zugewandten Seite umfasst und wobei der Eckpunkt der schrägen Kante, der näher zum Räumerelement (3) ist, höher oberhalb der Schiene ist als der Eckpunkt der schrägen Kante, der näher zum Fahrgestell (2) ist.

3. Schienenfahrzeug nach Anspruch 1, wobei die Vorderseitenkomponente (7) eine Rampenform umfasst, die einen Luftstrom in Richtung der Gleise (9) und weg vom Räumerelement (3) ablenkt.

4. Schienenfahrzeug nach Anspruch 1 oder 3, wobei die Rückseitenkomponente (8) eine Rampenform umfasst, die einen Luftstrom in Richtung der Gleise (9) und weg vom Nasenfahrgestell (2) und seinem Hohlraum ablenkt.

5. Schienenfahrzeug nach einem der Ansprüche 1 bis 4, wobei
die Rückseitenkomponente (8) unterhalb einer Halterung angebracht ist, mittels derer sie auf dem Zugboden befestigt ist, und
die Rückseite (21) der Halterung, die dem Fahrgestell zugewandt ist, sich über die gesamte Zugbreite erstreckt und am Zugboden endet.

## Revendications

1. Véhicule ferroviaire qui comprend une voiture de tête, la voiture de tête comprenant un nez avec une pointe de nez qui est une pointe (1) de la voiture de tête, un bogie (2), un équipement de partie inférieure (5) du nez qui est l'équipement qui est monté sur la partie inférieure dans une zone de nez, et une jupe (6) qui est une bande entourant les côtés verticaux de l'équipement de partie inférieure, le véhicule ferroviaire comprenant :
un composant avant (7) qui est un capot qui est placé sous la jupe (6) et s'étend sur toute la largeur de la jupe ; et
un composant arrière (8) qui est un capot séparé qui s'étend sur toute la largeur du nez ;
**caractérisé en ce que**
le véhicule ferroviaire comprend en outre un déflecteur (3) qui est configuré pour dévier des corps étrangers sur des voies ferrées (9) sur lesquelles le véhicule ferroviaire circule en utilisation, le déflecteur étant installé entre la jupe (6) et le bogie (2) sur un piston (4) ;
le composant avant (7) s'étend en outre sur toute la longueur de la jupe jusqu'au déflecteur (3), à l'exception d'un jeu entre le capot et le déflecteur afin de permettre au déflecteur de vibrer ;
le composant arrière (8) est placé entre le bogie (2) qui est le plus proche du nez et le déflecteur (3) à une distance du déflecteur qui est suffisamment grande pour lui permettre de vibrer ; et
le composant avant (7), dans une section transversale qui est parallèle au plan médian de la voiture de tête, est coudé vers les voies ferrées (9) sur le côté de déflecteur et la tangente à son sommet sur le bord coudé dans la même section transversale ne recoupe pas le déflecteur (3).

2. Véhicule ferroviaire selon la revendication 1, dans lequel
le composant arrière (8), dans une section transversale qui est parallèle au plan médian de la voiture avant, comprend un bord oblique (16) sur son côté faisant face aux voies ferrées (9), et le sommet du bord oblique plus proche du déflecteur (3) est plus haut au-dessus du rail que le sommet du bord oblique plus proche du bogie (2).

3. Véhicule ferroviaire selon la revendication 1, dans lequel
le composant avant (7) présente une forme de rampe qui dévie un flux d'air en direction des voies ferrées (9) à l'opposé du déflecteur (3).

4. Véhicule ferroviaire selon la revendication 1 ou 3, dans lequel
le composant arrière (8) présente une forme de rampe qui dévie un flux d'air en direction des voies ferrées (9) à l'écart du bogie avant (2) et de sa cavité.

5. Véhicule ferroviaire selon l'une quelconque des revendications 1 à 4, dans lequel
le composant arrière (8) est monté sous un support qui le fixe à la partie inférieure de train, et
la surface arrière (21) du support faisant face au bogie s'étend sur toute la largeur du train et atteint la partie inférieure du train.
